(19) 

**Europäisches Patentamt**
**European Patent Office**
**Office européen des brevets**

(11) **EP 4 574 855 A1**

(12) **EUROPEAN PATENT APPLICATION**
published in accordance with Art. 153(4) EPC

(43) Date of publication:
25.06.2025 Bulletin 2025/26

(21) Application number: 23855142.8

(22) Date of filing: 16.08.2023

(51) International Patent Classification (IPC):
*C08F 236/10* (2006.01)      *C08L 21/00* (2006.01)
*C08L 47/00* (2006.01)      *C08L 25/10* (2006.01)
*C08L 57/02* (2006.01)      *B60C 1/00* (2006.01)

(52) Cooperative Patent Classification (CPC):
B60C 1/00; C08F 236/10; C08L 21/00; C08L 25/10;
C08L 47/00; C08L 57/02

(86) International application number:
PCT/KR2023/012113

(87) International publication number:
WO 2024/039175 (22.02.2024 Gazette 2024/08)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 17.08.2022 KR 20220102534

(71) Applicant: Hanwha Solutions Corporation
Jung-gu
Seoul 04541 (KR)

(72) Inventors:
• **LEE, Chulwoong**
**Daejeon 34128 (KR)**
• **BYUN, Do Hyun**
**Daejeon 34128 (KR)**
• **LEE, Jinho**
**Daejeon 34128 (KR)**
• **KANG, Hyeon Uk**
**Daejeon 34128 (KR)**

(74) Representative: **Berggren Oy**
**P.O. Box 16**
**Eteläinen Rautatiekatu 10A**
**00101 Helsinki (FI)**

(54) **HYDROGENATED PETROLEUM RESIN AND TIRE TREAD RUBBER COMPOSITION COMPRISING SAME**

(57)     Provided are a hydrogenated petroleum resin capable of simultaneously improving braking property and fuel efficiency of a rubber composition for tire treads, and a composition for tire treads including the same.

【FIG. 1】

**Description**

[Technical Field]

Cross-reference to Related Application

The present application is based on, and claims priority from, Korean Patent Application No. 10-2022-0102534, filed on August 17, 2022, the disclosure of which is hereby incorporated by reference herein in its entirety.
The present invention relates to a hydrogenated petroleum resin and a rubber composition for tire treads including the same.

[Background Art]

Tire energy consumption efficiency is determined by measuring rolling resistance (RR) and wet grip of a tire. Rolling resistance refers to the energy loss between tires and road surface when driving, and the lower rolling resistance is evaluated as the better fuel efficiency. Wet grip is, related to braking performance on wet roads such as rainy road, etc., associated with safety.
In tire development, fuel efficiency improvement by reducing rolling resistance is one of the main tasks. However, rolling resistance and braking force have a trade-off relationship, and therefore, when rolling resistance is lowered, there is a problem in that braking performance deteriorates.
A rubber composition for tire treads consists of a raw material rubber, a filler, and other additives, and physical properties may be controlled by changing the type of raw material or by changing the composition. Accordingly, efforts are continuing to develop a rubber composition for tire treads that has an appropriate balance between required physical properties.

[Disclosure]

[Technical Problem]

There is provided a hydrogenated petroleum resin capable of simultaneously improving braking property and rolling resistance property of a rubber composition for tire treads, and a composition for tire treads including the same.

[Technical Solution]

To achieve the above object, according to one embodiment of the present invention,
there is provided a hydrogenated petroleum resin obtained by polymerization and hydrogenation reactions of a monomer mixture including dicyclopentadiene; an aromatic vinyl monomer; and optionally, an olefinic monomer, wherein aromaticity of the hydrogenated petroleum resin is 15% or less.
According to another embodiment of the present invention, there is provided a rubber composition for tire treads, the rubber composition including the hydrogenated petroleum resin.

[Effect of the Invention]

A hydrogenated petroleum resin of the present invention has excellent compatibility with rubber, and thus when applied to a rubber composition for tire treads, it is possible to maximize braking property without not greatly increasing rolling resistance. Accordingly, the rubber composition for tire treads including the hydrogenated petroleum resin is excellent in both braking force and fuel efficiency, thereby being appropriately used in manufacturing high-quality tires.

[Brief Description of Drawings]

FIG. 1 shows the results of a wet grip test (Tan 0°C) of each rubber composition for tire treads of Examples and Comparative Examples; and

FIG. 2 shows the results of a rolling resistance test (Tan 70°C, expressed as the reciprocal) of each rubber composition for tire treads of Examples and Comparative Examples.

[Detailed Description of the Embodiments]

As used herein, the term 'petroleum resin' refers to a resin polymerized by including dicyclopentadiene as a monomer, and specifically, refers to a resin in which a monomer mixture including dicyclopentadiene, an aromatic vinyl monomer, and optionally, an olefinic monomer is polymerized. Further, the 'hydrogenated petroleum resin' refers to a resin obtained by performing a hydrogenation reaction, i.e., a hydrogen addition reaction, on the above petroleum resin.

Further, as used herein, the term 'hydrogenation' or 'hydrogen addition reaction' refers to a reaction whereby an unsaturated bond such as a double bond, etc. is converted into a single bond by adding hydrogens thereto.

Further, the term 'monomer mixture' refers to a group of monomers without solvents or additives. The 'monomer composition' means that the monomer mixture is dispersed in a solvent, and may further include an initiator and other additives.

In the present invention, the terms "the first", "the second", and the like are used to describe a variety of components, and these terms are merely employed to differentiate a component from other components.

Further, the terminology used in the present specification is only for the purpose of describing exemplary embodiments and is not intended to restrict the present invention. The singular form includes a plural form unless contents are clearly indicated otherwise. It will be further understood that the terms "include", "equip", or "have", when used in the present specification, specify the presence of stated features, steps, components, and/or combinations thereof, but do not preclude the presence or addition of one or more other features, steps, components, and/or combinations thereof.

The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a hydrogenated petroleum resin and a rubber composition for tire treads including the same of the present invention will be described in more detail.

## Hydrogenated petroleum resin

A hydrogenated petroleum resin of the present invention may be obtained by polymerization and hydrogenation reactions of a monomer mixture including dicyclopentadiene; an aromatic vinyl monomer; and optionally, an olefinic monomer, and its aromaticity satisfies 15% or less.

Since the hydrogenated petroleum resin has excellent compatibility with a raw material rubber which is included in the rubber composition for tire treads, it is suitable to be included as an additive for providing adhesion. Therefore, the hydrogenated petroleum resin improves the braking performance of the composition for tire treads while minimizing a reduction in fuel efficiency.

The aromatic vinyl monomer may have 6 to 20 carbon atoms, and specifically, one or more selected from the group consisting of styrene, alpha-methylstyrene, para-methylstyrene, indene, methylindene, and vinyltoluene may be used as the aromatic vinyl monomer.

The olefinic monomer may have 2 to 20 carbon atoms, and specifically, may be one or more selected from the group consisting of piperylene, isoprene, ethylene, propylene, 1-butene, 1-pentene, 1-hexene, 1-heptene, 1-octene, 1-decene, 1-undecene, 1-dodecene, 1-tetradecene, and 1-hexadecene.

In one embodiment, styrene may be used as the aromatic vinyl monomer, and piperylene may be used as the olefinic monomer.

The dicyclopentadiene is used as a main monomer, and may be specifically included in an amount of 50 parts by weight or more, or 60 parts by weight or more, or 70 parts by weight or more, and 90 parts by weight or less, or 80 parts by weight or less with respect to 100 parts by weight of the monomer mixture.

The aromatic vinyl monomer may be included in an amount of 10 parts by weight or more, or 20 parts by weight or more, and 30 parts by weight or less with respect to 100 parts by weight of the monomer mixture. When the content of the aromatic vinyl monomer satisfies the above range, it may exhibit excellent compatibility with the raw material rubber included in the rubber composition for tire treads and excellent adhesion property.

The olefinic monomer is a comonomer which is optionally included, and may be included in an amount of 0 part by weight to 20 parts by weight with respect to 100 parts by weight of the monomer mixture, or in amount of 0 part by weight or more, or 0.7 parts by weight or more, or 1 part by weight or more, and 15 parts by weight or less, or 10 parts by weight or less. In terms of compatibility with the raw material rubber, it is preferable that the content of the olefinic monomer is 20 parts by weight or less with respect to 100 parts by weight of the monomer mixture.

The remainder, excluding the aromatic vinyl monomer and the olefinic monomer from 100 parts by weight of the monomer mixture, may be dicyclopentadiene. **In** other words, the monomer mixture may not further include any comonomers other than the dicyclopentadiene, the aromatic vinyl monomer, and the olefin monomer which is optionally included.

Specifically, 100 parts by weight of the monomer mixture may consist of 10 parts by weight to 30 parts by weight of the aromatic vinyl monomer; 0 part by weight to 20 parts by weight of the olefinic monomer; and the remainder of dicyclopentadiene.

Alternatively, 100 parts by weight of the monomer mixture may consist of 20 parts by weight to 30 parts by weight of the aromatic vinyl monomer; 0 part by weight to 15 parts by weight of the olefinic monomer; and the remainder of dicyclopentadiene.

Alternatively, 100 parts by weight of the monomer mixture may consist of 20 parts by weight to 30 parts by weight of the aromatic vinyl monomer; 0.7 parts by weight to 15 parts by weight of the olefinic monomer; and the remainder of dicyclopentadiene.

Alternatively, 100 parts by weight of the monomer mixture may consist of 20 parts by weight to 30 parts by weight of the aromatic vinyl monomer; 0.7 parts by weight to 10 parts by weight of the olefinic monomer; and the remainder of dicyclopentadiene.

The hydrogenated petroleum resin according to one embodiment of the present invention satisfies the above monomer composition while satisfying aromaticity of 15% or less, thereby exhibiting excellent compatibility with the raw material rubber which is included in the composition for tire treads. Aromaticity is the content of aromatic double bonds in the petroleum resin, and may be measured through NMR analysis, and the specific measurement method will be described in Experimental Example below.

In order to ensure the above effect, it may be more preferable that the aromaticity of the hydrogenated petroleum resin is 15% or less, or 14.5% or less, and 3% or more, 5% or more, 6% or more, or 6.5% or more, in terms of improving braking property and rolling resistance property of the composition for tire treads. When the aromaticity of the hydrogenated petroleum resin exceeds 15%, its compatibility with the raw material rubber deteriorates, resulting in deterioration in braking property or rolling resistance property, and for this reason, it is preferable to satisfy the above range.

Meanwhile, it is preferable that the hydrogenated petroleum resin has a weight average molecular weight of 500 g/mol or more, or 600 g/mol or more, or 650 g/mol or more, and 1,000 g/mol or less, 950 g/mol or less, or 900 g/mol or less. When the weight average molecular weight of the hydrogenated petroleum resin satisfies the above range, it is preferable because the hydrogenated petroleum resin exhibits excellent rolling resistance property while exhibiting improved braking property.

Further, the hydrogenated petroleum resin may have a molecular weight distribution (PDI) in the range of 1.0 to 2.0, preferably, 1.2 or more or 1.5 or more, and 1.8 or less or 1.75 or less, and due to the narrow molecular weight distribution, the hydrogenated petroleum resin exhibits uniform physical properties.

The weight average molecular weight and molecular weight distribution of the hydrogenated petroleum resin may be measured through gel permeation chromatography, and detailed measurement methods will be described in Experimental Example below.

The hydrogenated petroleum resin may have a softening point of 90°C or higher, or 95°C or higher, and 120°C or lower, 115°C or lower, or 110°C or lower. When the softening point of the hydrogenated petroleum resin is too high or too low, deterioration in the compatibility with the raw material rubber may occur, and there may be a problem that only one of the rolling resistance property or braking property is prominent, and for this reason, it is desirable to satisfy the above range.

The hydrogenated petroleum resin exhibits excellent physical properties with a loss on heating of 3.0% or less, and preferably, satisfies a loss on heating of 2.8% or less, or 2.7% or less. As the heating loss is lower, the hydrogenated petroleum resin is more excellent, and theoretically, the loss on heating may be 0%.

The hydrogenated petroleum resin may be obtained by polymerization and hydrogenation reactions of the above-described monomer mixture. Specifically, the hydrogenated petroleum resin may be prepared by a preparation method including the step of preparing a petroleum resin by thermally polymerizing the monomer mixture including dicyclopentadiene; the aromatic vinyl monomer; and optionally, the olefinic monomer; and performing a hydrogenation reaction on the petroleum resin. The aromaticity of the hydrogenated petroleum resin may be controlled depending on the content ratio of the reactants and reaction conditions, hydrogenation conditions, etc., when preparing the petroleum resin.

The monomer mixture may be introduced into the thermal polymerization reaction in a state of being dispersed in a solvent, i.e., as a monomer composition.

The solvent that may be used to prepare the monomer composition is not particularly limited, and for example, one or more selected from the group consisting of pentane, hexane, heptane, nonane, decane, benzene, toluene, and xylene may be used.

Further, the monomer composition may further include additives commonly used in the technical field to which the present invention pertains, such as antioxidants and polymerization inhibitors.

The method of thermally polymerizing the monomer mixture is not particularly limited. However, for example, the method may include a) a first stage polymerization of thermally polymerizing the monomer mixture in a continuous stirred tank reactor (CSTR) and b) a second stage polymerization of thermally polymerizing the reaction product of the first stage polymerization in a plug flow reactor (PFR). In this regard, as described above, the monomer mixture may be used in the form of a monomer composition of being dissolved in a solvent.

When the thermal polymerization is performed in two stages as above, the heat of polymerization reaction may be easily controlled, the conversion rate or polymerization rate of monomers is remarkably improved, and the molecular weight distribution is narrow, making it possible to provide a petroleum resin with uniform physical properties.

The reaction temperature (T1) in the stage a) may be 210°C to 270°C, or 220°C to 270°C. When carried out at the above reaction temperature, the conversion or polymerization rate of the monomers is excellent, and occurrence of side reactions such as crosslinking reactions, etc. may be suppressed.

The reaction pressure in the stage a) may be 1 bar to 40 bar, or 5 bar to 35 bar, or 10 bar to 30 bar. When carried out at the above reaction pressure, the reactivity of monomers may be increased as long as there is no risk of safety accidents.

The reaction time in the stage a) may be 10 minutes to 90 minutes, or 20 minutes to 80 minutes, or 30 minutes to 70 minutes. When the reaction time is too short, the suppression of side reactions by mixing raw materials may be insufficient, and when the reaction time is too long, productivity of the final resin may be lowered and the molecular weight distribution may become wide. From this point of view, it is preferable that the reaction time is controlled within the range as described above.

The reaction temperature (T2) in the stage b) may be within the range of $\pm 30°C$ of the reaction temperature (T1) of the stage a), i.e., T1-30°C to T1+30°C, or T1-20°C to T1+20°C, or T1-15°C to T1+15°C. When carried out at the above reaction temperature, side reactions may be suppressed, and productivity may be increased.

In addition, when the temperature difference between the stage a) and the stage b) is controlled within $\pm 30°C$, as described above, the production of unreacted oligomers may be minimized and a dicyclopentadiene-based resin with a narrow molecular weight distribution may be prepared.

The reaction pressure in the stage b) may be 1 bar to 40 bar, or 5 bar to 35 bar, or 10 bar to 30 bar. When the reaction pressure is too low, reactivity may be low due to vaporized monomer, and when the pressure is too high, there is a high risk of safety accidents during the process. From this point of view, it is preferable to control the reaction pressure within the range as described above.

The reaction time in the stage b) may be 1 time to 4 times, or 1 time to 3 times, or 1 time to 2 times the reaction time in the stage a). When the reaction time is too short, as compared to the reaction time in the stage a) polymerization, the reaction may not sufficiently proceed, and when the reaction time is too long, side reactions may occur. From this point of view, it is preferable to control the reaction time within the range as described above.

Further, the internal volume of the PFR used in the stage b) polymerization may be 1 time to 3 times, or 1 time to 2.5 times, or 1 time to 2 times the internal volume of the CSTR used in the stage a) polymerization. When the internal volume of the PFR is too small, as compared to the internal volume of the CSTR, polymerization in the PFR may not sufficiently proceed, and a large amount of impurities such as wax may remain, and when the internal volume of the PFR is too large, as compared to the internal volume of the CSTR reactor, the effect of applying the CSTR reactor is poor, and control of the initial heat of reaction is insufficient, and thus it is difficult to control the reaction temperature. From this point of view, it is preferable to control the internal volume of the PFR within the range as described above.

The hydrogenation reaction or hydrogen addition reaction is not particularly limited and may be performed according to methods known in the art to which the present invention pertains. The hydrogenation reaction is a reaction that converts unsaturated bonds, such as double bonds, into single bonds by adding hydrogen. The hydrogenated petroleum resin may be obtained from the petroleum resin through hydrogenation.

The hydrogenation reaction may be performed according to methods known in the art to which the present invention pertains. For example, the hydrogenation reaction may be performed by introducing the obtained petroleum resin into a continuous hydrogenation tank which is packed with a hydrogenation catalyst.

The hydrogenation catalyst is not particularly limited, but any known hydrogenation catalyst may be used. For a specific example, one or more selected from the group consisting of Ni, Fe, Cu, Co, Mo, Pd, Rh, Pt, Nb, Au, Rd, and Raney Ni may be used as the hydrogenation catalyst.

To improve reactivity, the hydrogenation catalyst may be used in an amount of 0.1 parts by weight or more, or 0.3 parts by weight or more, or 0.5 parts by weight or more, and 1.5 parts by weight or less, or 1.0 parts by weight or less with respect to 100 parts by weight of the petroleum resin, but is not limited thereto.

The hydrogenation conditions are not particularly limited and may be appropriately controlled depending on the type and amount of the catalyst used, the amount of hydrogen added, etc. For example, the hydrogenation reaction may be performed at a pressure of 50 bar to 150 bar and a temperature range of 150°C to 300°C. When the hydrogenation reaction is performed at the above pressure and temperature, it is possible to prevent destruction of the molecular structure.

Further, hydrogen gas may be continuously introduced so that the constant reaction pressure is maintained during the hydrogenation reaction.

Meanwhile, the hydrogenation reaction may be performed once under the above-mentioned conditions, but may be performed by being divided into twice or more to achieve the desired aromaticity. When the hydrogenation reaction is performed twice or more, the conditions for each reaction may be the same as or different from each other.

The hydrogenated petroleum resin prepared by the above-described method has excellent compatibility with the raw material rubber used in the composition for tire treads, and due to its high adhesion performance, the hydrogenated petroleum resin may improve the braking property of the composition for tire treads while minimizing the increase in rolling resistance. Accordingly, the hydrogenated petroleum resin may be usefully applied as a tackifying resin for the composition for tire treads.

**Rubber composition for tire tread**

The rubber composition for tire treads of the present invention includes a raw material rubber and the above-described hydrogenated petroleum resin, thereby exhibiting high braking performance and fuel efficiency.

The hydrogenated petroleum resin is included in the rubber composition for tire treads to further improve the adhesion performance between rubbers and to improve the miscibility, dispersibility, and processability of fillers and other additives, thereby improving physical properties of the rubber composition.

In particular, as the hydrogenated petroleum resin satisfies the above-described monomer composition and aromaticity, it exhibits excellent compatibility with the raw material rubber and additives, and may minimize the increase in rolling resistance while providing the improved braking performance due to excellent adhesion.

The raw material rubber is not particularly limited as long as it has an olefinic double bond (carbon-carbon double bond), and a natural rubber, a synthetic rubber, or a mixture thereof may be used in a mixture.

For example, the raw material rubber may include one or more selected from the group consisting of natural rubber, butadiene rubber, nitrile rubber, silicone rubber, isoprene rubber, styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, halogenated isoprene rubber, halogenated isobutylene copolymer, chloroprene rubber, butyl rubber, and halogenated isobutylene-p-methylstyrene rubber.

In one embodiment, the rubber composition for tire treads may include the hydrogenated petroleum resin in an amount of 10 parts by weight or more, or 20 parts by weight or more, and 50 parts by weight or less, or 40 parts by weight or less, or 30 parts by weight or less with respect to 100 parts by weight of the raw material rubber. When the content of the hydrogenated petroleum resin is less than 10 parts by weight with respect to 100 parts by weight of the raw material rubber, it is difficult to secure dispersibility, processability and braking property, and when it exceeds 50 parts by weight, braking property becomes excellent, but there may be a problem in that rolling resistance becomes too high.

The rubber composition for tire treads may further include one or more selected from the group consisting of a filler, a silane coupling agent, an anti-aging agents, a softener, a vulcanizing agent, a vulcanization accelerator, and a vulcanization accelerator aid.

The filler is added to increase durability and heat resistance of tires and to improve anti-chipping performance, anti-cutting performance, and anti-wear performance. For example, carbon black and/or silica may be used.

The carbon black may have a nitrogen surface area per gram (N2SA) of 30 $m^2$/g to 300 $m^2$/g and an n-dibutyl phthalate (DBP) oil absorption amount of 60 cc/100 g to 180 cc/100 g.

When the nitrogen surface area per gram of the carbon black exceeds 300 $m^2$/g, processability of the rubber composition for tires may be unfavorable, and when it is less than 30 $m^2$/g, reinforcing performance by carbon black as the filler may be unfavorable. In addition, when the DBP oil absorption amount of the carbon black exceeds 180 cc/100g, processability of the rubber composition may deteriorate, and when it is less than 60 cc/100g, reinforcing performance by carbon black as the filler may be unfavorable.

The carbon black may be included in an amount of 1 part by weight to 50 parts by weight, or 5 parts by weight to 30 parts by weight with respect to 100 parts by weight of the raw material rubber. When the content of carbon black is less than 1 part by weight, the reinforcing performance by carbon black as the filler may deteriorate, and when it exceeds 50 parts by weight, processability of the rubber composition may be unfavorable.

The silica may have a nitrogen surface area per gram (N2SA) of 100 $m^2$/g to 180 $m^2$/g, and a cetyl trimethyl ammonium bromide (CTAB) surface area per gram of 110 $m^2$/g to 170 $m^2$/g. The invention is not limited to thereto.

When the nitrogen surface area per gram of the silica is less than 100 $m^2$/g, the reinforcing performance of silica as the filler may be unfavorable, and when it exceeds 180 $m^2$/g, the processability of the rubber composition may be unfavorable. In addition, when the CTAB surface area per gram of the silica is less than 110 $m^2$/g, the reinforcement performance by silica as the filler may be unfavorable, and when it exceeds 170 $m^2$/g, the processability of the rubber composition may be unfavorable.

The silica may be included in an amount of 10 parts by weight to 150 parts by weight, and preferably, 50 parts by weight to 100 parts by weight with respect to 100 parts by weight of the raw material rubber. When the content of the silica is less than 10 parts by weight, strength improvement of the rubber may be poor and the fuel efficiency of tires may deteriorate, and when the content of the silica exceeds 150 parts by weight, wear performance may deteriorate.

Meanwhile, when the silica is used, a silane coupling agent may be further included for mixing silica. The silane coupling agent may include vinyltrichlorosilane, vinyltriethoxysilane, vinyltris(β-methoxyethoxy)silane, β-(3,4-epoxycyclohexyl)-ethyltrimethoxysilane, 3-chloropropyltrimethoxysilane, 3-chloropropyltriethoxysilane, 3-mercaptopropyltrimethoxysilane, 3-mercaptopropyltriethoxysilane, bis(3-(triethoxysilyl)propyl)disulfide, bis(3-triethoxysilylpropyl)trisulfide, bis(3-(triethoxysilyl)propyl)tetrasulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzoyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide, etc. These compounds may be used alone or in a mixture of two or more thereof. Preferably, bis(3-(triethoxysilyl)propyl)tetrasulfide may be used.

The silane coupling agent may be included in an amount of 1 part by weight to 15 parts by weight, or 5 parts by weight to 10 parts by weight with respect to 100 parts by weight of the raw material rubber in order to improve the dispersibility of the silica. When the content of the silane coupling agent is less than 1 part by weight, dispersibility improvement of silica may be poor, resulting in deterioration in the processability of rubber or fuel efficiency. When it exceeds 20 parts by weight, the interaction between silica and rubber is too strong, and thus fuel efficiency may be excellent, but braking performance may greatly deteriorate.

The anti-aging agent is an additive which is used to stop a chain reaction in which a tire is automatically oxidized by oxygen. The anti-aging agent may include any one suitably selected from the group consisting of amine-based, phenol-based, quinolone-based, imidazole-based antiaging agents, carbamate metal salts, wax, and combinations thereof.

The amine-based anti-aging agent may be any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine, and combinations thereof. The phenol-based anti-aging agent may be any one selected from the group consisting of 2,2'-methylene-bis(4-methyl-6-tert-butylphenol), 2,2'-isobutylidene-bis(4,6-dimethylphenol), 2,6-di-t-butyl-p-cresol, and combinations thereof. The quinolone-based anti-aging agent may include 2,2,4-trimethyl-1,2-dihydroquinoline and derivatives thereof, and specifically, may be any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and combinations thereof. The wax may be preferably a waxy hydrocarbon.

The anti-aging agent may be included in an amount of 1 part by weight to 10 parts by weight with respect to 100 parts by weight of the raw material rubber, considering conditions that the anti-aging agent should have high solubility with respect to rubber in addition to an antiaging effect, should be low in volatility and inactive to rubber, and should not hinder vulcanization.

The softener is added to facilitate processing by imparting plasticity to rubber or to reduce hardness of vulcanized rubber. Petroleum-based oil, vegetable oil, and combinations thereof may be used. Specifically, the softener may include treated distillate aromatic extracts (TDAE) oil, mild extraction solvate (MES) oil, residual aromatic extract (RAE) oil, or heavy naphthenic oil. Preferably, TDAE oil may be used.

In terms of processability, the softener is preferably used in an amount of 0 part by weight to 20 parts by weight with respect to 100 parts by weight of the raw material rubber.

The vulcanizing agent may preferably include a sulfur-based vulcanizing agent. The sulfur-based vulcanizing agent may include inorganic vulcanizing agents, such as a sulfur (S) powder, an insoluble sulfur (S), a precipitated sulfur (S), a colloidal sulfur, etc. The organic vulcanizing agent may specifically include a vulcanizing agent for preparing element sulfur or sulfur, e.g., amine disulfide, polymer sulfur, etc.

When the vulcanizing agent is included in an amount of 0.5 parts by weight or more or 1.0 part by weight or more, and 4.0 parts by weight or less or 3.0 parts by weight or less with respect to 100 parts by weight of the raw material rubber, it is preferable in terms of securing appropriate vulcanization effect and stability of the raw material rubber.

The vulcanization accelerator is an accelerator which accelerates a vulcanization rate or accelerates a delayed action in the initial vulcanization step.

The vulcanization accelerator may include, for example, thiuram-based accelerators such as tetramethylthiuram monosulfide, tetramethylthiuram disulfide, tetraethylthiuram disulfide, etc.; thiazole-based accelerators such as 2-mercaptobenzothiazole, dibenzothiazyl disulfide, etc.; sulfenamide-based accelerators such as n-cyclohexyl-2-benzothiazylsulfenamide, N-oxydiethylene-2-benzothiazolylsulfenamide, etc.; aldehyde-amine accelerators such as n-butyraldehyde-aniline condensation products, butyraldehyde-monobutylamine condensation products, etc.; aldehyde-ammonia based accelerators such as hexamethylenetetramine, etc.; thiourea-based accelerators such as thiocarbanilide, etc.; guanidine-based accelerators such as 1,3-diphenylguanidine, etc. When these vulcanization accelerators are blended, one type thereof may be used alone, or a combination of two or more thereof may be used. For example, 1,3-diphenylguanidine (DPG) and N-cyclohexyl-2-benzothiazolesulfenamide (CBTS) may be used as the vulcanization accelerator.

In terms of improving physical properties, the vulcanization accelerator is preferably used in an amount of 0.1 part by weight to 10 parts by weight with respect to 100 parts by weight of the raw material rubber.

The vulcanization accelerator aid is used in combination with the vulcanization accelerator to further improve the acceleration effect.

The vulcanization accelerator aid may include metal oxides such as zinc oxide and magnesium oxide, etc.; metal hydroxides such as calcium hydroxide, etc.; metal carbonates such as zinc carbonate, basic zinc carbonate, etc.; fatty acids such as stearic acid, oleic acid, etc.; aliphatic metal salts such as zinc stearate, magnesium stearate, etc.; amines such as n-butylamine, dicyclohexylamine, etc.; ethylene dimethacrylate, diallyl phthalate, N,N-m-phenylene dimaleimide, triallyl isocyanurate, trimethylolpropane trimethacrylate, etc. When these vulcanization aids are blended, one type thereof may be used alone or two or more types thereof may be used in combination.

The vulcanization accelerator aid is preferably used in an amount of 0.1 part by weight to 10 parts by weight with respect to 100 parts by weight of the raw material rubber, in terms of improving physical properties.

Meanwhile, the rubber composition for tire treads may further include various additives which are used in the rubber industry, e.g., additional additives, such as a vulcanization retarder, a peptizing agent, a process oil, a plasticizer, etc.

The rubber composition for tire treads may be prepared by mixing the above components using a mixer, for example, a plastomill, a Banbury mixer, a roll or an internal mixer, etc.

The rubber composition for tire treads prepared by the above method may be used as a material constituting a tread portion (and a cap portion including the tread portion) in contact with the road surface, and may be further used in various rubber components constituting tires, for example, a sidewall, a sidewall insert, an apex, a chafer, a wire coat, an inner liner, etc.

Tires to be manufactured using the above rubber composition for tire treads have a high grip property to exhibit excellent driving stability and braking property, and have low rolling resistance, thereby being suitably used as fuel-efficient and high-performance tires.

Hereinafter, the actions and effects of the present invention will be described in more detail with reference to the specific exemplary embodiments of the present invention. However, these exemplary embodiments are merely presented for illustrating the present invention, and the scope of the present invention is not defined thereby.

[Example]

### \<Preparation of hydrogenated petroleum resin\>

### Example 1-1

693 g of dicyclopentadiene, 300 g of styrene, and 7 g of piperylene were mixed in 1,000g of a xylene solvent to prepare a monomer composition. The monomer composition was continuously introduced into a continuous stirred tank reactor (CSTR) with an internal volume of 0.416 L, and reacted with stirring for 42 minutes under conditions of a temperature of 265°C and a pressure of 25 bar to prepare a primary polymer.

The primary polymer prepared as above was continuously introduced into a plug flow reactor (PFR) with an internal volume of 0.590 L which was connected to the continuous stirred tank reactor and polymerized for 63 minutes under conditions of a temperature of 277°C and a pressure of 25 bar. The polymerized product was decompressed at 200°C for 30 minutes to recover a petroleum resin.

Hydrogenation was performed three times under conditions of a temperature of 260°C and a pressure of 100 bar using 0.5% by weight of a palladium catalyst and a hydrogen amount of 4 NL/min with respect to the total weight of the petroleum resin to prepare a hydrogenated petroleum resin.

### Example 1-2

A hydrogenated petroleum resin was prepared in the same manner as in Example 1-1, except that hydrogenation was performed on a petroleum resin once.

### Example 1-3

800 g of dicyclopentadiene and 200 g of styrene were mixed in 1,000 g of a xylene solvent to prepare a monomer composition. The monomer composition was polymerized in the same manner as in Example 1-1 to prepare a petroleum resin.

Hydrogenation was performed twice under conditions of a temperature of 260°C and a pressure of 100 bar using 0.5% by weight of a palladium catalyst and a hydrogen amount of 4 NL/min with respect to the total weight of the petroleum resin to prepare a hydrogenated petroleum resin.

### Example 1-4

760 g of dicyclopentadiene, 200 g of styrene, and 40 g of piperylene were mixed in 1,000 g of a xylene solvent to prepare a monomer composition. A hydrogenated petroleum resin was prepared using the monomer composition in the same manner as in Example 1-3.

### Example 1-5

730 g of dicyclopentadiene, 200 g of styrene, and 70 g of piperylene were mixed in 1,000 g of a xylene solvent to prepare a monomer composition. A hydrogenated petroleum resin was prepared using the monomer composition in the same manner as in Example 1-3.

### Example 1-6

680 g of dicyclopentadiene, 200 g of styrene, and 120 g of piperylene were mixed in 1,000 g of a xylene solvent to prepare a monomer composition. A hydrogenated petroleum resin was prepared using the monomer composition in the same manner as in Example 1-3.

### Example 1-7

750 g of dicyclopentadiene and 250 g of styrene were mixed in 1,000 g of a xylene solvent to prepare a monomer composition. A hydrogenated petroleum resin was prepared using the monomer composition in the same manner as in Example 1-1.

### Example 1-8

675 g of dicyclopentadiene, 250 g of styrene, and 75 g of piperylene were mixed in 1,000 g of a xylene solvent to prepare a monomer composition. A hydrogenated petroleum resin was prepared using the monomer composition in the same manner as in Example 1-2.

### Example 1-9

693 g of dicyclopentadiene, 300 g of styrene, and 7 g of piperylene were mixed in 1,000 g of a xylene solvent to prepare a monomer composition. A hydrogenated petroleum resin was prepared using the monomer composition in the same manner as in Example 1-3.

### Example 1-10

693 g of dicyclopentadiene, 300 g of styrene, and 7 g of piperylene were mixed in 1,000g of a xylene solvent to prepare a monomer composition. The monomer composition was continuously introduced into a continuous stirred tank reactor (CSTR) with an internal volume of 0.416 L, and reacted with stirring for 42 minutes under conditions of a temperature of 265°C and a pressure of 25 bar to prepare a primary polymer.

The primary polymer prepared as above was continuously introduced into a plug flow reactor (PFR) with an internal volume of 0.590 L which was connected to the continuous stirred tank reactor and polymerized for 63 minutes under conditions of a temperature of 277°C and a pressure of 25 bar. The polymerized product was decompressed at 200°C for 30 minutes to recover a petroleum resin.

Hydrogenation was performed twice under conditions of a temperature of 260°C and a pressure of 100 bar using 0.5% by weight of a palladium catalyst and a hydrogen amount of 4 NL/min with respect to the total weight of the petroleum resin to prepare a hydrogenated petroleum resin.

### Comparative Example 1-1

805.1 g of dicyclopentadiene, 170 g of styrene, and 24.9 g of piperylene were mixed in 1,000g of a xylene solvent to prepare a monomer composition. The monomer composition was continuously introduced into a continuous stirred tank reactor (CSTR) with an internal volume of 0.416 L, and reacted with stirring for 42 minutes under conditions of a temperature of 265°C and a pressure of 25 bar to prepare a primary polymer.

The primary polymer prepared as above was continuously introduced into a plug flow reactor (PFR) with an internal volume of 0.590 L which was connected to the continuous stirred tank reactor and polymerized for 63 minutes under conditions of a temperature of 277°C and a pressure of 25 bar. The polymerized product was decompressed at 200°C for 30 minutes to recover a petroleum resin.

## Comparative Example 1-2

693 g of dicyclopentadiene, 300 g of styrene, and 7 g of piperylene were mixed in 1,000 g of a xylene solvent to prepare a monomer composition. A petroleum resin was prepared using the monomer composition in the same manner as in Comparative Example 1-1.

## Comparative Example 1-3

693 g of dicyclopentadiene, 300 g of styrene, and 7 g of piperylene were mixed in 1,000g of a xylene solvent to prepare a monomer composition. The monomer composition was continuously introduced into a continuous stirred tank reactor (CSTR) with an internal volume of 0.416 L, and reacted with stirring for 42 minutes under conditions of a temperature of 265°C and a pressure of 25 bar to prepare a primary polymer.

The primary polymer prepared as above was continuously introduced into a plug flow reactor (PFR) with an internal volume of 0.590 L which was connected to the continuous stirred tank reactor and polymerized for 63 minutes under conditions of a temperature of 272°C and a pressure of 25 bar. The polymerized product was decompressed at 200°C for 30 minutes to recover a petroleum resin.

Hydrogenation was performed once under conditions of a temperature of 250°C and a pressure of 100 bar using 0.5% by weight of a palladium catalyst and a hydrogen amount of 4 NL/min with respect to the total weight of the petroleum resin to prepare a hydrogenated petroleum resin.

## Experimental Example 1: Evaluation of physical properties of petroleum resin

(1) Softening point (°C)

The softening point was measured using a ring and ball softening method (ASTM E 28).

In detail, the petroleum resin was dissolved and introduced into a ring-shaped frame, which was put into a beaker containing glycerin, and then balls were put on the ring filled with the petroleum resin, and heated at a temperature increase rate of 2.5°C/min to measure the temperature (softening point) when the resin melted and balls fell.

(2) Weight average molecular weight (Mw, g/mol) and Molecular weight distribution (PDI)

The weight average molecular weight (Mw), number average molecular weight (Mn), and molecular weight distribution (PDI) in terms of polystyrene were determined by gel permeation chromatography (GPC) (Infinity1260). The molecular weight distribution was calculated by dividing the measured weight average molecular weight by the number average molecular weight.

The petroleum polymer for measurement was dissolved at a concentration of 0.05% by weight in tetrahydrofuran, and 10 $\mu$l thereof was injected into GPC. Tetrahydrofuran was used as a mobile phase of GPC, and introduced with at a flow rate of 1 mL/min, and analysis was performed at 35°C. As a column, one guard column and three of PL gel 5 $\mu$m 50A, PL gel 5 $\mu$m 100A, oligopore 300A were connected in series. A refractive index detector (RID) was used as a detector to measure the molecular weights at 30°C.

12 kinds of polystyrene standards with a molecular weight (g/mol) of 104 / 118 / 236 / 580 / 1480 / 2340 / 2970 / 5030 / 8450 / 10850 / 20650 / 24600 were used.

(3) Loss on heating (%)

3 g of the petroleum resin was put in an analyzer for loss on heating (AND MX-50), and heated at 180°C for 1 hour. Loss on heating was calculated by converting the weight change before and after heating into a percentage.

(4) Melt viscosity (MV 180 and MV 200, cPs)

Melt viscosity values were measured according to ASTM D3236. 8 g of the petroleum resin was put and dissolved in a heating chamber, and rotated for 10 minutes at the corresponding temperature (MV 180: 180°C, MV 200: 200°C) using an SC4-18 spindle, and the stabilized value was measured.

(5) Aromaticity (%)

The resin was dissolved at a concentration of 2.5% by weight in a solvent CDCl$_3$, and then $^1$H-NMR analysis (600 MHz) was performed. As shown in Equation 1 below, aromaticity (%) was calculated from a ratio of the number of protons in the aromatic region to the total number of hydrogens (protons) in the polymer.

[Equation 1]

$$\text{Aromaticity}(\%) = \frac{\text{Ar}_A}{\text{Ar}_A + O_A + \text{Al}_A} \times 100$$

In Equation 1, Ar$_A$ is the number of protons obtained from the area ratio of the hydrogen peak bound to the aromatic hydrocarbon, appearing in the aromatic region, specifically, in the region of 6.0 ppm to 9.0 ppm, O$_A$ is the number of protons obtained from the area ratio of the hydrogen peak appearing in the olefin region, specifically, in the region of 4.0 ppm to 6.0 ppm, and Al$_A$ is the number of protons obtained from the area ratio of the hydrogen peak bound to the aliphatic hydrocarbon, appearing in the aliphatic region, specifically, in the region of 0.1 ppm to 4.0 ppm.

(6) Glass transition temperature (Tg, °C)

The glass transition temperature was measured using differential scanning calorimetry (DSC) at a temperature increase rate of 5°C/min in the range of 0°C to 150°C.

[Table 1]

|  | Softening point (°C) | Mw (g/mol) | PDI | Loss on heating (%) | MV 180 (cPs) | MV 200 (cPs) | Aromaticity(%) | Tg (°C) |
|---|---|---|---|---|---|---|---|---|
| Comparative Example 1-1 | 101 | 887 | 1.76 | 1.73 | 304 | 115 | 10.4 | 52.9 |
| Comparative Example 1-2 | 103.5 | 1010 | 1.79 | 0.93 | 432 | 160 | 20 | 58.9 |
| Comparative Example 1-3 | 101.3 | 775 | 1.59 | 1.52 | 225 | 82 | 16.4 | 52.1 |
| Example 1-1 | 100 | 850 | 1.71 | 1.59 | 269 | 92 | 6.8 | 52.7 |
| Example 1-2 | 100 | 850 | 1.68 | 1.19 | 212 | 76 | 14.5 | 53.7 |
| Example 1-3 | 100.8 | 669 | 1.57 | 2.54 | 224 | 83 | 7.7 | 50.2 |
| Example 1-4 | 104.3 | 714 | 1.58 | 1.35 | 265 | 92 | 8.4 | 56.3 |
| Example 1-5 | 101 | 790 | 1.71 | 2.64 | 182 | 77 | 8 | 53.4 |
| Example 1-6 | 101 | 800 | 1.66 | 1.87 | 180 | 62 | 8.7 | 52.7 |
| Example 1-7 | 102.5 | 733 | 1.61 | 1.86 | 204 | 78 | 8.19 | 52.8 |
| Example 1-8 | 101 | 818 | 1.66 | 1.69 | 223 | 83 | 8.82 | 52.2 |
| Example 1-9 | 101.8 | 831 | 1.59 | 1.02 | 262 | 95 | 9.37 | 55 |
| Example 1-10 | 102.3 | 770 | 1.58 | 1.06 | 230 | 85 | 9.6 | 54.8 |

**<Preparation of rubber composition for tire tread>**

**Examples 2-1 to 2-10 and Comparative Examples 2-1 to 2-3**

84.60 g of a styrene-butadiene rubber (SBR, Kumho Petrochemical, Co., Ltd., 5251H) and 28.20 g of a neodymium butadiene rubber (Kumho Petrochemical, Co., Ltd., NdBR40) as raw material rubbers;

112.87 g of silica (EVONIK, Ultrasil VN3 GR) and 5.64 g of carbon black (OEC, N220) as fillers;

11.29 g of bis(3-(triethoxysilyl)propyl)tetrasulfide (TESPT, EVONIK, Si-69) as a silane coupling agent;

1.69 g of N-(1,3-dimethylbutyl)-N'-phenyl-p-phenylenediamine (6PPD) as an anti-aging agent;

2.11 g of 1,3-diphenylguanidine (DPG) and 1.47 g of N-cyclohexyl-2-benzothiazolesulfenamide (CBTS) as vulcanization accelerators;

3.39 g of ZnO and 2.26 g of stearic acid as vulcanization accelerator aids;

1.58 g of sulfur as a vulcanizing agent;

19.75 g of treated distillate aromatic extracts (TDAE) and 1.13 g of wax as softening agents; and

22.57 g of the petroleum resin shown in Table 2 below were added and compounded in a brabender mixer to prepare each rubber composition for tire treads.

## Comparative Example 2-4

The raw materials were added at the same mixing ratio as in Examples 2-1 to 2-10 and Comparative Examples 2-1 to 2-2, while adding no petroleum resin, and 42.32 g of TDAE and 1.13 g of wax were used as softening agents to prepare a rubber composition for tire treads.

[Table 2]

| Rubber composition | Example 2-1 | Example 2-2 | Example 2-3 | Example 2-4 | Example 2-5 | Example 2-6 | Example 2-7 | Example 2-8 | Example 2-9 | Example 2-10 | Comparative Example 2-1 | Comparative Example 2-2 | Comparative Example 2-3 | Comparative Example 2-4 |
|---|---|---|---|---|---|---|---|---|---|---|---|---|---|---|
| Petroleum resin | Example 1-1 | Example 1-2 | Example 1-3 | Example 1-4 | Example 1-5 | Example 1-6 | Example 1-7 | Example 1-8 | Example 1-9 | Example 1-10 | Comparative Example 1-1 | Comparative Example 1-2 | Comparative Example 2-3 | Not added |

**Experimental Example 2: Evaluation of physical properties of compositions for tire treads**

Each rubber specimen was prepared using each of the rubber compositions for tire treads of Examples 2-1 to 2-10 and Comparative Examples 2-1 to 2-3 by the following method, and wet grip and rolling resistance were measured.

(1) Preparation of rubber specimen

Compounding was performed for preparing the rubber composition for tire treads, and then vulcanization was performed at 160°C for about 20 minutes to prepare each rubber specimen for test. t90 value of MDR (Moving die rheometer) was applied as a vulcanization time.

(2) Measurement of physical properties

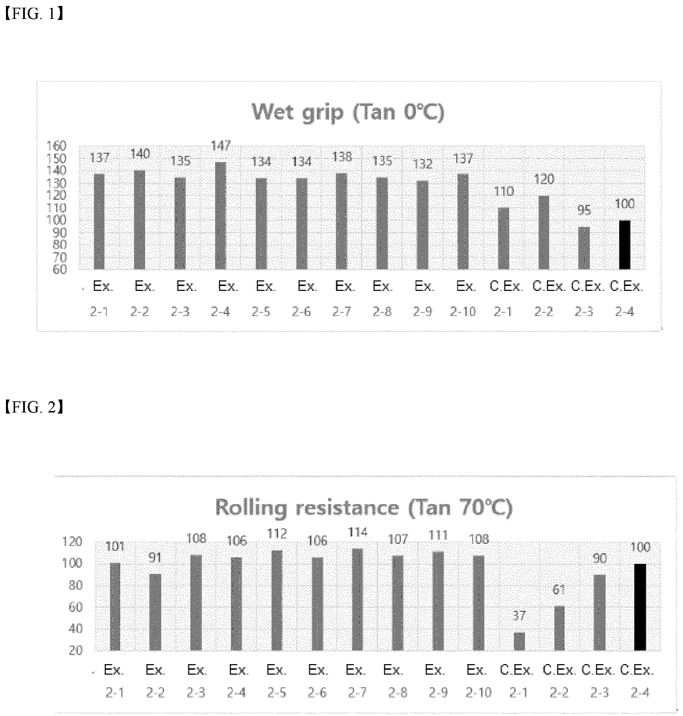

For each rubber specimen prepared above, the loss factors (Tan $\delta$) related to wet grip and rolling resistance were measured in the temperature range of -80°C to 110°C at 10 Hz using dynamic mechanical analysis (Model: TA-DMA Q800). In this regard, the relative loss factors of Examples and Comparative Examples were calculated, based on the result value (100) of Comparative Example 2-3, and the results are shown in FIGS. 1 and 2.
Tan 0°C is related to wet grip, and the higher value indicates the better braking force. Tan 70°C is related to rolling resistance property, and the lower value indicates the lower rolling resistance, indicating better fuel efficiency. However, in FIG. 2, the reciprocals of Tan 70°C was taken for convenience, and in FIG. 2, the higher values are considered to indicate lower rolling resistance.
Referring to FIGS. 1 and 2, it was found that the rubber compositions for tire treads of Examples 2-1 to 2-10 are superior in both braking and rolling resistance properties, as compared to Comparative Examples 2-1 and 2-2, in which non-hydrogenated petroleum resin was used, and Comparative Example 2-4 including TDAE as the softening agent.
Further, referring to Comparative Example 2-3, it was found that when the hydrogenated petroleum resin having aromaticity of more than 15% was used, although the monomer composition was similar to those of Examples, both the braking force and rolling resistance properties of the tire tread composition deteriorated, and the braking property was inferior as compared to Comparative Example 2-2 and Comparative Example 2-3, in which the non-hydrogenated petroleum resin was used.
These results indicate that the hydrogenated petroleum resin with aromaticity of 15% or less, which is obtained from the monomer mixture including dicyclopentadiene, the aromatic vinyl monomer, and optionally, the olefinic monomer, may be used in the rubber composition for tire treads, thereby improving braking property and fuel efficiency at the same time.

**Claims**

1.  A hydrogenated petroleum resin which is obtained by polymerization and hydrogenation reactions of a monomer mixture comprising

    dicyclopentadiene;
    an aromatic vinyl monomer; and
    optionally, an olefinic monomer,
    wherein aromaticity of the hydrogenated petroleum resin is 15% or less.

2.  The hydrogenated petroleum resin according to claim 1, wherein the content of the aromatic vinyl monomer in 100 parts by weight of the monomer mixture is 10 parts by weight to 30 parts by weight.

3.  The hydrogenated petroleum resin according to claim 1 or 2, wherein the content of the olefinic monomer in 100 parts by weight of the monomer mixture is 0 part by weight to 20 parts by weight.

4.  The hydrogenated petroleum resin according to claim 1, wherein 100 parts by weight of the monomer mixture consists of

    20 parts by weight to 30 parts by weight of the aromatic vinyl monomer;
    0 part by weight to 15 parts by weight of the olefinic monomer; and
    the remainder of dicyclopentadiene.

5. The hydrogenated petroleum resin according to any one of claims 1 to 4, wherein aromaticity is 5% to 14.5%.

6. The hydrogenated petroleum resin according to any one of claims 1 to 5, wherein a weight average molecular weight is 500 g/mol to 1,000 g/mol.

7. The hydrogenated petroleum resin according to any one of claims 1 to 6, wherein the aromatic vinyl monomer is one or more selected from the group consisting of styrene, alpha-methylstyrene, para-methylstyrene, indene, methylindene, and vinyltoluene.

8. The hydrogenated petroleum resin according to any one of claims 1 to 7, wherein the olefinic monomer is one or more selected from the group consisting of piperylene, isoprene, ethylene, propylene, 1-butene, 1-pentene, 1-hexene, 1-heptene, 1-octene, 1-decene, 1-undecene, 1-dodecene, 1-tetradecene, and 1-hexadecene.

9. A rubber composition for tire treads comprising:

    a raw material rubber; and
    the hydrogenated petroleum resin according to any one of claims 1 to 8.

10. The rubber composition for tire treads according to claim 9, wherein the hydrogenated petroleum resin is included in an amount of 10 parts by weight to 50 parts by weight with respect to 100 parts by weight of the raw material rubber.

11. The rubber composition for tire treads according to claim 9 or 10, further comprising one or more selected from the group consisting of a filler, an activator, an antioxidant, a vulcanizing agent, and a vulcanization accelerator.

【FIG. 1】

【FIG. 2】

## INTERNATIONAL SEARCH REPORT

| International application No. |
|---|
| **PCT/KR2023/012113** |

**A. CLASSIFICATION OF SUBJECT MATTER**

**C08F 236/10**(2006.01)i; **C08L 21/00**(2006.01)i; **C08L 47/00**(2006.01)i; **C08L 25/10**(2006.01)i; **C08L 57/02**(2006.01)i; **B60C 1/00**(2006.01)i

According to International Patent Classification (IPC) or to both national classification and IPC

**B. FIELDS SEARCHED**

Minimum documentation searched (classification system followed by classification symbols)

C08F 236/10(2006.01); B01J 21/08(2006.01); B01J 23/70(2006.01); B60C 1/00(2006.01); C08F 2/00(2006.01); C08F 212/00(2006.01); C08F 212/06(2006.01); C08F 240/00(2006.01); C08F 8/04(2006.01); C09J 157/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수첨(hydrogenation), 석유수지(petroleum resin), 방향족화도 (aromaticity), 디사이클로펜타디엔(dicyclopentadiene), 방향족 비닐계 단량체(aromatic vinyl monomer), 올레핀계 단량체 (olefin monomer)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0082576 A (HANWHA SOLUTIONS CORPORATION) 17 June 2022 (2022-06-17) See claim 1; paragraphs [0040]-[0143]; and table 2. | 1-4 |
| A | KR 10-2021-0039665 A (HANWHA SOLUTIONS CORPORATION) 12 April 2021 (2021-04-12) See entire document. | 1-4 |
| A | KR 10-2019-0081127 A (HANWHA CHEMICAL CORPORATION) 09 July 2019 (2019-07-09) See entire document. | 1-4 |
| A | KR 10-2021-0077581 A (KOLON INDUSTRIES, INC.) 25 June 2021 (2021-06-25) See entire document. | 1-4 |
| A | KR 10-2020-0120662 A (RAIN CARBON GERMANY GMBH) 21 October 2020 (2020-10-21) See entire document. | 1-4 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 November 2023** | **24 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | |
|---|---|
| International application No. | |
| **PCT/KR2023/012113** | |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **10**
   because they relate to parts of the international application that do not comply with the prescribed requirements to such an extent that no meaningful international search can be carried out, specifically:

   Claim 10 refers to claims violating the manner of referring to dependent claims under PCT Rule 6.4(a), and thus is unclear.

3. ☑ Claims Nos.: **5-9, 11**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
Information on patent family members

| Patent document cited in search report | | | Publication date (day/month/year) | Patent family member(s) | | | Publication date (day/month/year) |
|---|---|---|---|---|---|---|---|
| KR | 10-2022-0082576 | A | 17 June 2022 | WO | 2022-124741 | A1 | 16 June 2022 |
| KR | 10-2021-0039665 | A | 12 April 2021 | JP | 2022-551095 | A | 07 December 2022 |
| | | | | KR | 10-2414716 | B1 | 28 June 2022 |
| | | | | US | 2022-0356379 | A1 | 10 November 2022 |
| | | | | WO | 2021-066267 | A1 | 08 April 2021 |
| KR | 10-2019-0081127 | A | 09 July 2019 | CN | 111491727 | A | 04 August 2020 |
| | | | | EP | 3733288 | A1 | 04 November 2020 |
| | | | | EP | 3733288 | A4 | 25 August 2021 |
| | | | | JP | 2021-505385 | A | 18 February 2021 |
| | | | | KR | 10-2300823 | B1 | 09 September 2021 |
| | | | | US | 2021-0002403 | A1 | 07 January 2021 |
| | | | | WO | 2019-132407 | A1 | 04 July 2019 |
| KR | 10-2021-0077581 | A | 25 June 2021 | CN | 114341212 | A | 12 April 2022 |
| | | | | CN | 114341212 | B | 06 January 2023 |
| | | | | CN | 116041622 | A | 02 May 2023 |
| | | | | EP | 4001330 | A1 | 25 May 2022 |
| | | | | EP | 4001330 | A4 | 09 August 2023 |
| | | | | JP | 2022-550081 | A | 30 November 2022 |
| | | | | KR | 10-2155698 | B1 | 14 September 2020 |
| | | | | US | 2022-0220243 | A1 | 14 July 2022 |
| | | | | WO | 2021-125837 | A1 | 24 June 2021 |
| KR | 10-2020-0120662 | A | 21 October 2020 | CN | 111971314 | A | 20 November 2020 |
| | | | | EP | 3752542 | A1 | 23 December 2020 |
| | | | | JP | 2021-514414 | A | 10 June 2021 |
| | | | | JP | 7133631 | B2 | 08 September 2022 |
| | | | | KR | 10-2556496 | B1 | 17 July 2023 |
| | | | | US | 2021-0189038 | A1 | 24 June 2021 |
| | | | | WO | 2019-158638 | A1 | 22 August 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220102534